(19) Europäisches Patentamt
European Patent Office
Office européen des brevets

(11) **EP 2 260 925 B1**

(12) **EUROPEAN PATENT SPECIFICATION**

(45) Date of publication and mention
of the grant of the patent:
**12.08.2015 Bulletin 2015/33**

(51) Int Cl.:
***B01F 13/00*** (2006.01)     ***B01D 21/01*** (2006.01)
***B01D 45/12*** (2006.01)     ***C02F 1/52*** (2006.01)
***B01D 21/26*** (2006.01)

(21) Application number: **10165542.1**

(22) Date of filing: **10.06.2010**

(54) **Particle removal method including mixing and separation in a spiral channel**

Methode zur Mischung und Abtrennung von Partikeln mittels eines spiralförmigen Kanals

Methode pour mélanger et séparer des particules avec un canal en spirale

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **12.06.2009 US 484058**

(43) Date of publication of application:
**15.12.2010 Bulletin 2010/50**

(73) Proprietor: **Palo Alto Research Center Incorporated
Palo Alto, California 94304 (US)**

(72) Inventors:
• **Lean, Meng H.**
  **Santa Clara, CA 95054 (US)**
• **Chang, Norine**
  **Menlo Park, CA 94025 (US)**
• **Kole, Ashutosh**
  **Palo Alto, CA 94306 (US)**
• **Seo, Jeonggi**
  **Albany, CA 94706 (US)**

(74) Representative: **Grünecker Patent- und Rechtsanwälte
PartG mbB
Leopoldstraße 4
80802 München (DE)**

(56) References cited:
**EP-A1- 2 058 284     EP-A2- 1 942 329
EP-A2- 2 060 312     DE-A1- 4 200 802**

• **THIRUVENKATACHARI R ET AL: "Flocculation-cross-flow microfiltration hybrid system for natural organic matter (NOM) removal using hematite as a flocculent" DESALINATION, ELSEVIER, AMSTERDAM, NL LNKD- DOI: 10.1016/S0011-9164(02)00580-5, vol. 147, no. 1-3, 10 September 2002 (2002-09-10), pages 83-88, XP004386413 ISSN: 0011-9164**

**Description**

BACKGROUND

Conventional macro-scale separation methods include floatation, sedimentation, centrifugation, and filtration. More recent developments in microfluidics include the use of micro-scale multi-physics forces for separation and enrichment. All, however, suffer from one or more of the following issues: high energy requirements, large footprint of the device/system, slow process times, low throughput, batch processing, and implementation/infrastructure complexity. The macroscale methods require density differences and large particle size which translates into high relative gravitational (G) forces. The micro-scale methods require especially high energy to throughput ratio and precise control over the separation mechanism(s) and work only for low mass loading.

Previous U.S. Patent Applications to Lean et al., US 2009/0114607, filed on November 7, 2007, entitled, Fluidic Device and Method for Separation of Neutrally Buoyant Particles; and US 2009/0114601, entitled, Device and Method for Dynamic Processing in Water Purification taught a novel two-step clarification approach that combines a mixer with downstream hydrodynamic separation. Features of the device/system described therein include: being highly scalable, highly configurable, purely fluidic and membrane-less, with a modular construction, small device/system footprint, a continuous flow, size selective cut-off, and accelerated agglomeration kinetics; the latter contributing directly to 50% reduction in dosage of aggregation agents.

A "Flocculation-cross-flow microfiltration hybrid system for natural organic matter (NOM) removal using hematite as a flocculent" is known from R. Thiruvenkatachari et al., Desalination 147 (2002), 83-88. A device for wastewater treatment is known from DE 42 00 802

BRIEF DESCRIPTION

The invention provides a method for treating a fluid stream by a fluid treatment system according to claim 1. Further embodiments are given by the dependent claims.

BRIEF DESCRIPTION OF THE DRAWINGS

Figure 1 is a top view of a spiral mixer-conditioner according to the present application;
Figure 2 illustrates the velocity of fluid flow within the device of Figure 1.
Figure 3 depicts the transverse velocity vectors of flow within the device of Figure 1;
Figure 4 depicts typical curves for shear rate as a function of aggregate size;
Figure 5 is a characteristic curve for aggregation size as a function of time within a spiral mixer-conditioner according to the present application;
Figure 6 is a process schematic for raw seawater or brackish water treatment incorporating the concepts of the present application;
Figure 7 is a process schematic for an alternative arrangement of raw seawater or brackish water treatment;
Figure 8 is a process schematic for creating hydroxide precipitates from concentrated brine;
Figure 9 is a process schematic for a two-stage precipitation and separation followed by coagulation, flocculation and separation of all other suspensions from seawater or brackish water;
Figure 10 is a process schematic for coagulation, flocculation and separation of suspended organics from seawater for membrane distillation (MD);
Figure 11 is a process schematic for a two-stage separation of coarse particles followed by coagulation, flocculation and separation of fine particles into medium fine tails (e.g., tailing pond water);
Figure 12 is a process schematic for precipitation, aggregation and separation of divalent metal ions from produce water;
Figure 13 is a process schematic to pre-treat raw seawater or brackish water to directly remove suspensions without chemical coagulation for ballast water and returning the waste stream directly to the ocean at point of intake;
Figure 14 is a process schematic for removal of suspended organic in matter from seawater using coagulants for ballast water;
Figure 15 is a process schematic for algae dewatering for biofuel production, feed stock and clarification of polished waste water prior to surface discharge;
Figure 16 is a system employing an arrangement of Figure 15;
Figure 17 is a process schematic for coagulation, flocculation and separation of process water, e.g. grape wash water prior to surface discharge;
Figure 18 is a process schematic for two-stage separation of process water, e.g. palm oil mill effluent (POME); including initial suspension separation followed by coagulation, flocculation and separation to produce clarified water suitable for surface discharge;
Figure 19 is a process schematic for aggregation and recovery of volume dispersed TiO2 nanoparticles used in an advanced oxidation technology UV sterilization system;
Figure 20 is a process schematic for wastewater treatment where suspended organics, including bacteria and nutrients are recirculated back to a primary clarifier; and
Figure 21 is a process schematic for wastewater treatment where the waste stream is channeled to the anaerobic digester to increase reaction rate and production of methane.

>

DETAILED DESCRIPTION

The following discussion describes enhanced features of a spiral mixer to include aggregate conditioning capabilities; and provides process schematics for applications of this spiral mixer-conditioner where this platform technology is applicable.

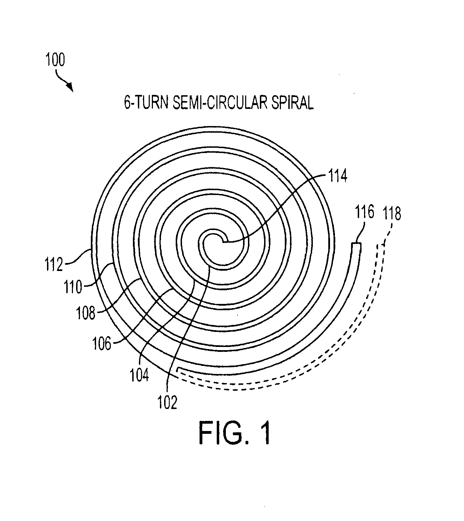

Spiral mixers previously disclosed allow for turbulent mixing of a chemical injected into a flow stream just ahead of a 90 degree turn at the mixer inlet and throughout the spiral channels of the mixer. In the spiral mixer-conditioner 100 of Figure 1, aggregate conditioning capabilities are added to that mixer.

According to the invention, as shown in the embodiment of Figure 1, mixing takes place in the first two turns 102, 104 of spiral mixer-conditioner 100 where the fluid stream regime is designed for high Dean number (*i.e.*, at or above the critical number of 150) operation. In this regime, transverse fluid flows within the channels cannot reach a force equilibrium so particle (particulate) suspensions continue a helical swirl across the channel cross-section. The enhancement to previously described spiral mixers is that the fluid flow in the channels corresponding to turns 106-112, do attain an equilibrium. The Dean number is a dimensionless quantity typically denoted by the symbol $D_e$ for flow in a channel and is defined as:

$$\text{De} = \frac{\rho V D}{\mu}\left(\frac{D}{2R}\right)^{1/2}$$

where, p is the density of the fluid; : $\mu$ is the dynamic viscosity; *V* is the axial velocity; *D* is the hydraulic diameter (other shapes are represented by an equivalent diameter, see Reynolds number); and *R* is the radius of curvature of the path of the channel

In this embodiment, the channels are square channels in cross section, however, of course other channel cross-section designs may be used. Also, while this is a six turn semi-circular spiral, the spiral mixer-conditioners as described herein may be Archimedes spirals and have more or fewer turns (*i.e.*, n-turns). It is also noted that the flow stream enters spiral mixer-conditioner 100 at inlet 114 and exits at outlet 116. Dashed line outlet 118 is provided to illustrate that two or more outlets may be used in alternate embodiments.

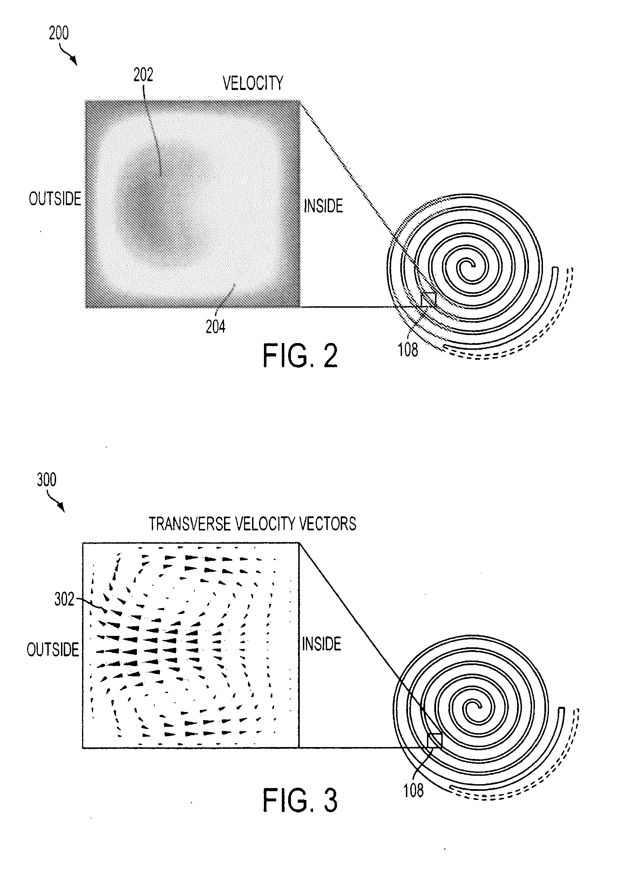

The velocity distribution of the fluid flow within the channel cross-section of the spiral mixer-conditioner 100 is depicted in Figure 2 at turn 108, and Figure 3 represents the transverse velocity vectors for the same channel cross-section in turn 108.

With continuing attention to Figure 2, the image is a cross section view 200 of flow velocity occurring within the square channel at turn 108 on the left hand side of the channel. The speed or velocity of the flow is identified with the darker image 202 representing a high velocity, and the brighter image 204 representing lower or almost zero velocity. This flow is due to centrifugal force. As mentioned, this image is taken from the left hand side of the channel, and the centrifugal forces are moving toward the outer side of the channel.

Returning to Figure 3, transverse velocity vectors for the same flow are illustrated 300, representing a design where neutrally buoyant particles move along the velocity vectors as identified by the arrow movements 302 (see U.S. Serial No. 11/936,729 for a discussion of separation of neutrally buoyant particles). It is to be understood Figure 3 is the transverse view, and if a cross section of this view is taken a double vortex would be shown as the view proceeds along the channel. Also, there is a component of the transverse velocity vector flow that comes out of the plane of the image, so if one follows the particles in the stream, then the helical path is being followed down the channel.

Again, the spiral mixer-conditioner is designed with six turns, however there may be other numbers of turns (n-turns) as long as sufficient mixing and conditioning is accomplished for the specific implementation.

According to the invention, the first two turns and/or operation of the spiral mixer conditioner are designed so the resulting Dean number is such that the fluid flow in channels of the first two turns 102, 104 is in a turbulent regime. What this means is that even though there is a setting up of transverse velocity vector flow it is set up such that the forces do not balance and due to that, particles continue to move around without being in equilibrium. It is only after the third turn (i.e., from the third turn to the sixth turn) that the forces within the channel enter a state of force equilibrium allowing the particles in the flow to move closer to one side wall and enter a stagnation state within the flow path. While the flow will look much the same throughout the spiral, a difference is the magnitude of the transverse velocity. Particularly, in the first two turns the transverse velocity is very high, then as the flow spirals out the radius of curvature increases, which results in the dropping of forces allowing the flow to enter a steady state laminar regime where shear stress is employed for conditioning of the particles within the flow.

More particularly, centrifugal force drops in turns 106-112, creating a force balance. The transverse flow vectors are used to sweep the neutrally buoyant particles and move them to the position of equilibrium. Reaching the desired equilibrium is based on the dropping of the centrifugal force. The desired drop in centrifugal force corresponds to the dropping of the Dean-number below the critical value of 150.

The conditioning (or aggregation) capability of the spiral mixer-conditioner can be achieved in two ways. The first is by changing the cross section of the geometry of the spiral mixer. The second way is to change the flow rate speed. Both are attempting to control the shear rate of the system in the conditioning spirals. The shear rate is the gradient of the transverse velocity, and is the parameter that relates the size of the aggregate emerging from the mixer-conditioner to the cut-off size in the downstream separator.

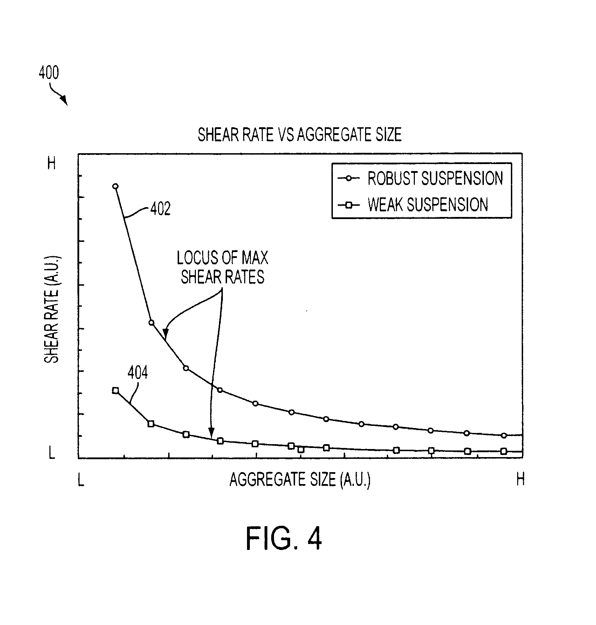

Figure 4 helps explain this concept.

As mentioned above, spiral mixer-conditioner 100 of the present invention is designed with the first two turns 102, 104 acting as the mixing portion. In particular, the channels including the first two turns are operated above the critical Dean number (i.e., at or greater than 150), causing the flow in the first two turns to be chaotic and with no flow equilibrium. Of course it is understood the number of mixing turns in this chaotic state may vary, so the spiral mixer may include 3, 4 or more mixing turns as long as the flow in those turns is above the critical Dean number (*i.e.*, at or greater than 150). Turns 106-112 of spiral mixer conditioner 100 are designed to achieve a required shear rate. The shear rate being selected based, for example, on the curves of Figure 4, which show that as the shear rate is increased, the aggregate size of the particles in the flow decrease. In other words, aggregate size is based on the shear rate. The shear rate is increased by increasing the velocity of the flow within a chosen channel size. As the shear rate increases, the particles tend to break up into smaller aggregates.

In one embodiment, the structure of spiral mixer-conditioner 100 has the channel widths being selected to be the same size throughout the spiral. In this situation the flow rate is then controlled to have the Dean number in the first two turns (102-104) to be above the chaotic value and the flow in the remaining turns (106-112) of the spiral cause the Dean number to drop below the critical value of 150. This drop occurs due to the original flow rate, the size of the channels and the increasing number of spiral turns 106-112.

Thus the velocity of input fluid is selected to enter the inlet 114 so that the shear rate in the first two turns 102, 104 will be above the Dean number for chaotic action, but the shear rate Dean number will be below the critical value for the remaining turns 106-112.

Figure 4 is a graph 400, which illustrates shear rate versus aggregate size. The shear rate axes range from a low shear rate to a high shear rate from the bottom of the page to the top, and the aggregate size axes range from a low aggregate size on the left hand side to a greater size on the right hand side. Curve 402 represents the characteristics of a robust suspension and curve 404 represents the characteristics of a weak suspension, with the locus of maximum shear rate of each suspension identified.

It is understood that the spiral mixer-conditioner in the present application may be designed to be useful with aggregates of many different morphologies. For example, one could have clay particles which are very robust and can sustain a very high shear rate before fragmenting, or one can use floc which is fluffy and susceptible to fragmentation under a very low shear rate. It is understood that these curves therefore, are general curves showing the idea of the present concepts.

Examples of shear rates versus particle sizes would include a robust aggregate, such as clay particles that are resilient to high shear forces. An aggregate size in this range would be a diameter (d) of $5\mu m$ at a shear rate of g=10,000/second (g=shear rate). For a weak suspension, the aggregate may be a chemical floc (e.g., alum-treated colloidal dirt) that fragment under lower shear forces. These weak suspension aggregates may have an aggregate size of a $d=30\mu m$-$50\mu m$ at a shear rate of g=500/second.

With continuing attention to Figure 4, consider the top curve 402 which is for robust suspension. Curve 402 represents generally the locus of maximum shear rate for this robust type of particle. So basically no aggregate of this type of robust particle can be above this curve 402. Curve 404 provides a similar representation for a suspension with weak particles. The idea here is that larger aggregates stay intact at low shear rates as shown on the right side of the curve. When the shear rate is increased by increasing the pumping velocity then the aggregates will break up to the size that can be stable at the new shear rate given by the left side of the curve. So Figure 4 can be used for system design. For example, given a certain desired particle size, one identifies the corresponding appropriate shear rate.

Thus, from the foregoing it is shown the operation and/or the design of spiral mixer-conditioner 100 is made to have a custom designed shear rate in the channels of turns 106-112 to control the aggregation rate and size in conformance with the curves shown in Figure 4. Uncontrolled aggregation leads to rapid growth of very loosely bound suspensions. Higher shear rates fracture aggregates down to the size sustainable by van der Waals forces. The upper curve in Figure 4 implies stronger-aggregated suspensions compared to the lower curve. The designed shear rate, which controls the aggregate growth and size, results in dense uniformly-sized suspensions conditioned for efficient downstream hydrodynamic separation by, for example, a spiral separator.

This conditioning (aggregation) feature may be extended for the purposes of:

1. Inducing precipitation or suspension formation from dissolved materials (e.g. divalent metals to prevent scaling - such as Mg and Ca (magnesium and calcium);

2. Promoting aggregation of smaller suspensions into larger and more robust agglomerates (e.g. aggregation of titanium dioxide (TiO2) nanoparticles for regeneration and reuse as photocatalyst in advanced ultraviolet (UV) oxidation systems); and

3. Capturing for reuse of volume dispersed carrier suspensions functionalized to treat contaminants in liquids (e.g. activated carbon particles to absorb organics and hydrocarbons, or polystyrene beads functionalized to selectively capture target analytes for threat agent bio detection).

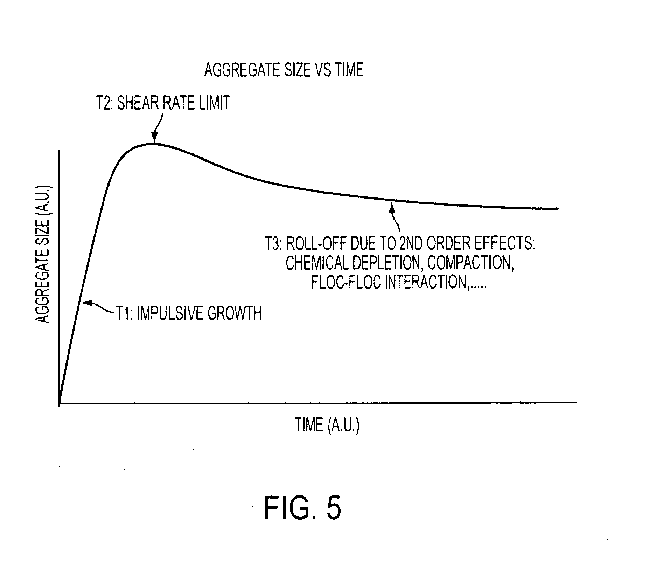

The suspension is allowed to grow in an aggregation tank to reach the size suitable for downstream cutoff separation. Growth rates vary depending on the morphology, chemistry, and material types of the suspensions. Some may not need much retention time if at all in the aggregation tank. Figure 5 illustrates the characteristic aggregation size as a function of time as three sequential time intervals: T1, T2, T3, corresponding to the Impulsive Growth, Aggregate Size Limited, and Size Roll-off. The typical curve has three sequential time intervals:

- T1: Impulsive Growth - occurs during rapid mixing in narrow channels when aggregation is driven by particle concentration and orthokinetics (convection driven) to increase probability of collision events;

- T2: Aggregate Size Limited - is limited when fluid shear exceeds van der Waal force; and

- T3: Size Roll-Off - Roll-off of aggregate size due to second-order effects which may be attributed to chemical depletion, compaction, and aggregate-aggregate interactions.

It is to be understood that growth is intended to mean the aggregation of the particles. Particularly, in a confined channel there is the same amount of flow (including particles) now in a more confined space. This narrowing increases the likelihood that the particles collide at a speed wherein the equilibrium state causes them, or certain percentages of them, to stick together and grow into a larger aggregate particle during the impulsive growth stage (T1).

Then at stage T2, aggregates which have been formed reach growth plateaus, only holding together depending upon its morphology (type of material) and the shear applied in the channel. Again, when the shear rate is above a certain value for a certain type of material, aggregate growth is limited by the shear rate, thereby limiting the overall aggregate size. Then at T3, one can see, after the plateau, there is a size roll off due to $2^{nd}$ order effects, such as chemical depletion within the system, compaction, floc-floc interaction, among other issues which can cause the aggregate size to drop off by as much as 10% from its T2 state.

The term compaction is when particles press together but do not actually cling together, and the pressing removes water from the aggregates, making them more compact (e.g., smaller), but does not join the separate aggregates together.

The floc-floc interaction is where the aggregates abrade against each other and remove some of the particles from either or both of the aggregates.

Industrial Flow Processes

As will be discussed in more detail below, the described novel methodology can serve as a platform technology for many industrial separations, including:

- Municipal water treatment - already disclosed in a previous application but this application will also benefit from the conditioning discussion captured in this invention.

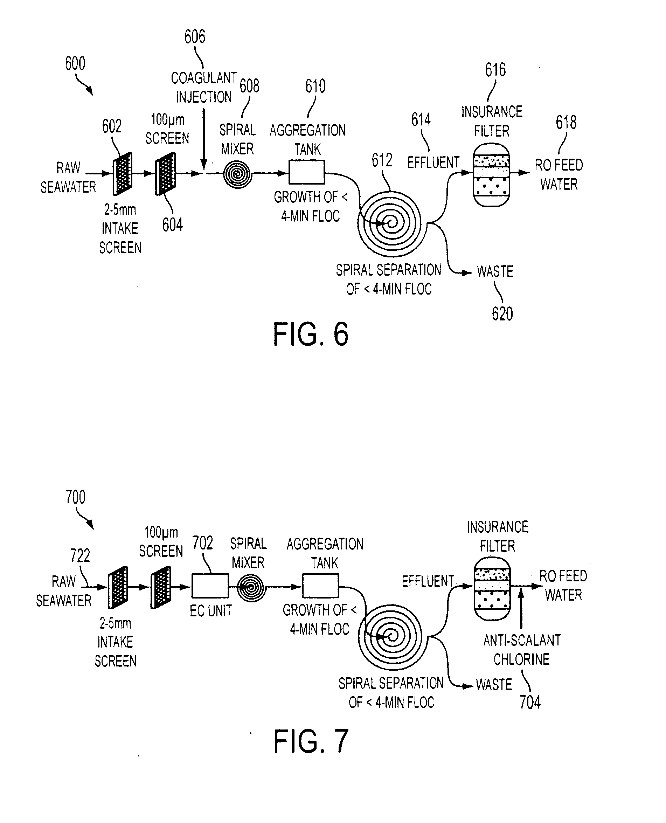

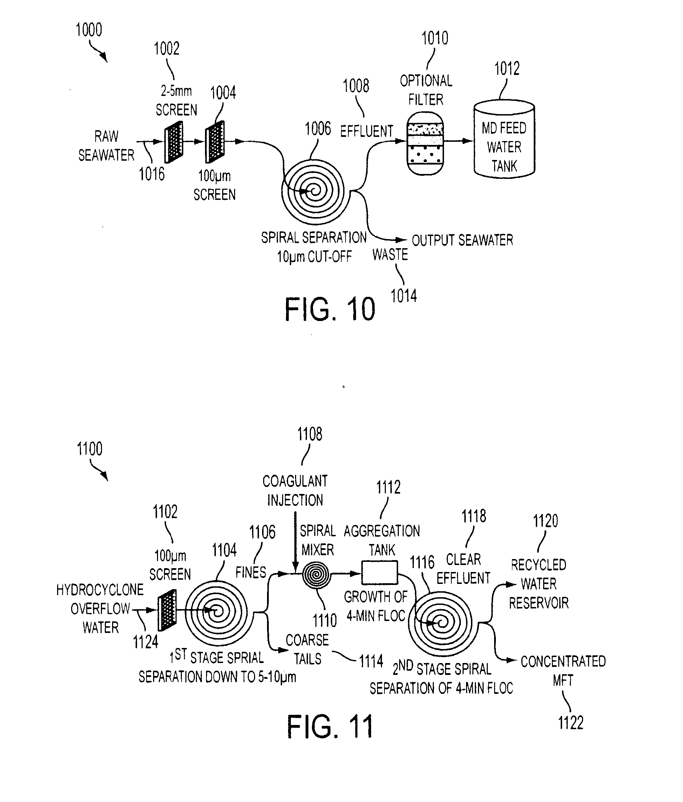

- Seawater and brackish water desalination - pretreatment for reverse osmosis (RO) and scalant removal (Figures 6, 7, 8 and 9) and membrane distillation (Figure 10)

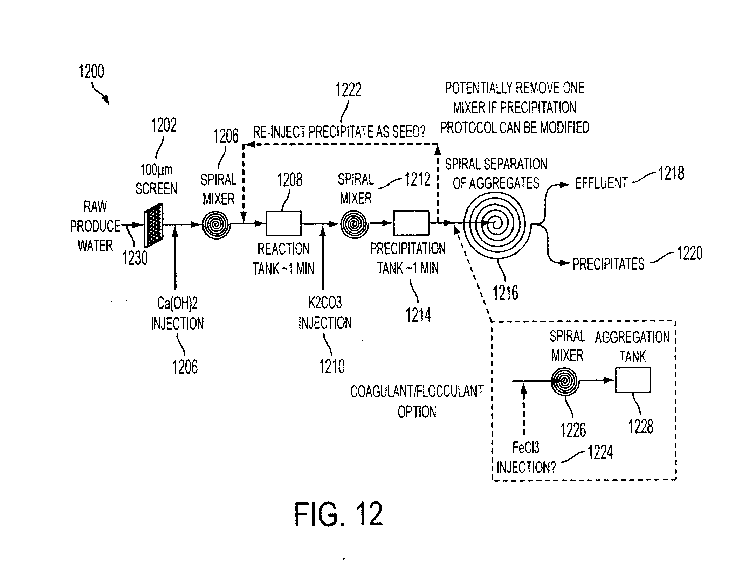

- Produced water - frac water, flow-back water, oil/water separation (Figures 11 and 12)

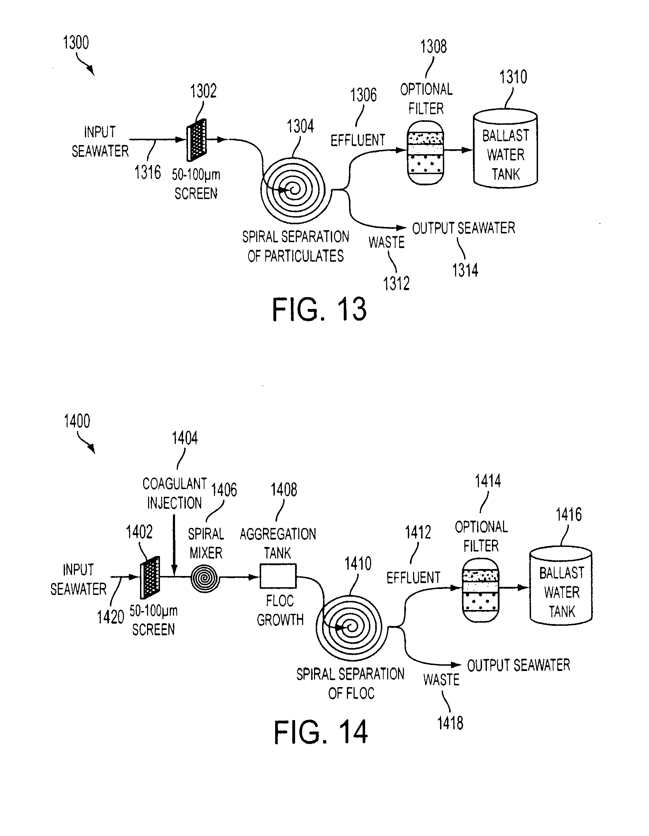

- Ballast water - separation of organics and other suspensions from seawater (Figures 13 and 14)

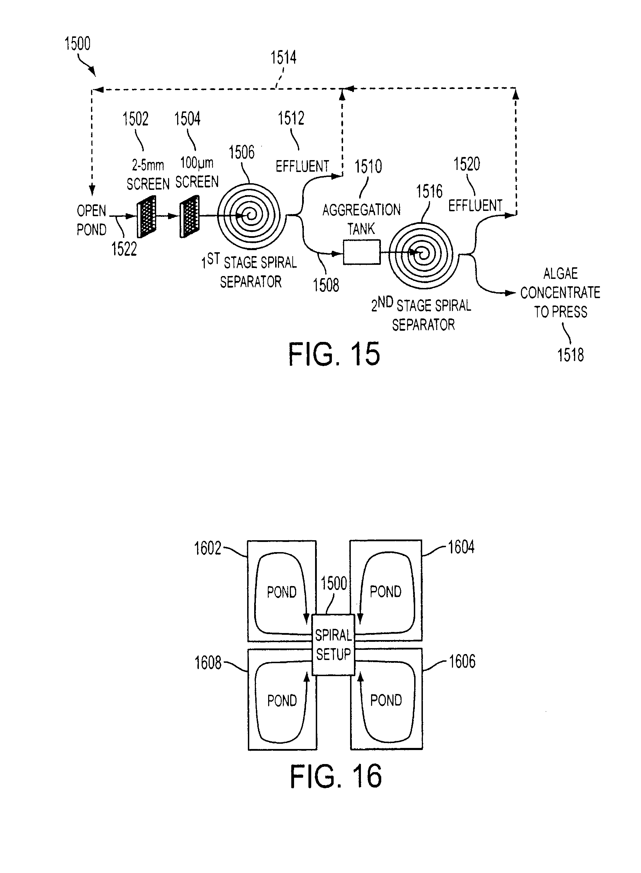

- Algae dewatering - biofuels production and prior to polished wastewater discharge (Figure 16)

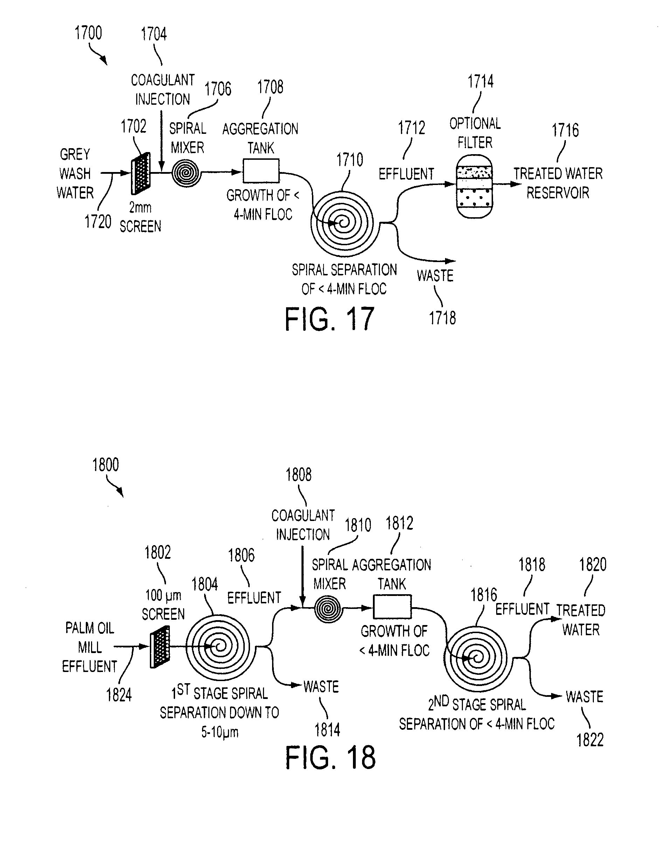

- Agricultural water - grape wash water, palm oil mill effluent (Figures 17 and 15)

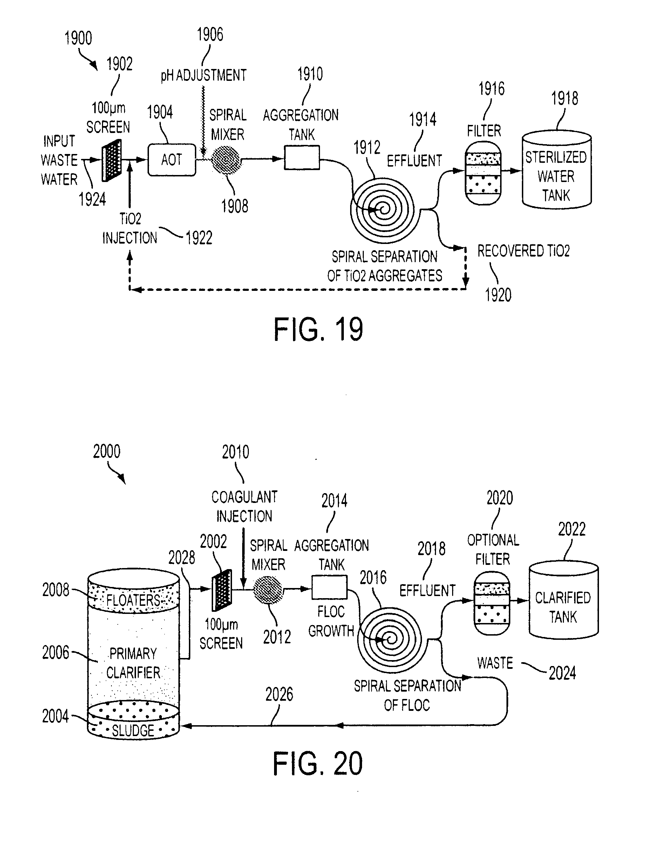

- Aggregation and recovery of volume dispersed TiO2 or functionalized synthetic particulates (Figure 19)

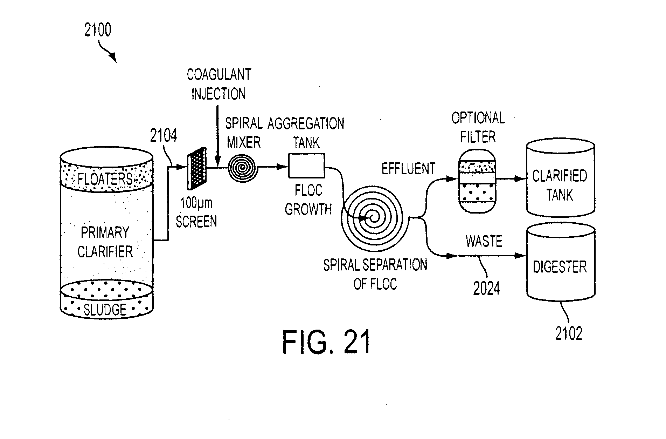

- Wastewater treatment - concentrate primary effluent to digester for increased rate and methane production (Figures 20 and 21)

Process schematics shown in Figures 6 to 21 are exemplary of the many diverse applications for this technology. Schematics for other applications may be inferred by those skilled in the art. Other applications will include:

- Process water - e.g. cleaning up creamery whey water

- Bio fluids - pharmaceutical processing e.g. separation of WBC from RBC, vaccine fluid clarification

- Bio detection - high throughput screening for increased selectivity and sensitivity

- Industrial water purification - e.g. Si kerf recovery

- Scalant removal - power plant cooling, seawater pretreatment

- Groundwater remediation - divalent ion precipitation

- Petroleum refining - oil/water separation

- Colloidal chemistry - chemical processing

- Mining

- Food and beverage

Figure 6 is a process schematic for raw seawater or brackish water treatment prior to reverse osmosis (RO) in a desalination configuration using chemical coagulation. The RO membranes require very high quality feedwater to operate effectively. Traditional methods include conventional water treatment and, more recently, membrane systems. The former is slow and requires large land space. The latter requires frequent maintenance in backflush and chemical cleaning.

System 600 includes a first input filter 602 which may be a 2-5mm filter sized intake screen for filtering the raw seawater. Following filter 602, a second filter 604 is provided for further filtering and may be a $100 \mu m$ screen filter. The filtered water passes a coagulate injection system 606 which injects coagulant of an appropriate type into the water stream. Then the coagulant injected water stream is mixed in a spiral mixer-conditioner 608. The output of spiral mixer-conditioner 608 is then moved to an aggregation tank 610 where the aggregated particles are allowed to grow further such as for approximately 4 minutes for certain floc. The flow with the aggregates are then moved from the aggregation tank 610 to a spiral separation device 612 which includes an effluent output 614 (where the aggregates have been removed by spiral separator 612), and the flow is further filtered by insurance filters 616 and is then provided as RO feed water 618. Water from a second output of spiral separator 612 is provided as a waste stream 620, and contains the separated-out aggregates. The rate at which the raw seawater is input into system 600 may in one embodiment be controlled by a pump represented by arrow 622.

System 600 uses In-line coagulation, flocculation and separation to pre-treat RO feedwater. The process includes the following characteristics:

1) Aggregate sub-micron organic/inorganic particles for hydrodynamic separation to clarify RO feedwater;

2) 50% reduction in coagulant dosage with spiral mixer-conditioner compared to standard jar test protocol (*i.e.*, rapid mixing for 2 minutes followed by 28 minutes and long periods for sedimentation);

3) No formal flocculation step and no sedimentation needed;

4) Fast process - minutes instead of hours;

5) Continuous flow or intermittent operation with flow controls.

Figure 7 is a process schematic for raw seawater or brackish water treatment prior to RO in a desalination configuration using electro-coagulation. The advantage is in situ generation of the coagulant.

System 700 has a similar configuration as system 600 of Figure 6. However, following second filter 604, the coagulant injection system 606 is replaced with an electro-coagulation unit 702. Thereafter the components such as shown in Figure 6 are used. A further distinction is injection of antiscalant chlorine 704, following filtering by the insurance filter 616. The rate at which the raw seawater is input into system 700 may in one embodiment be controlled by a pump represented by arrow 722.

System 700 permits on-site chemical generation, much lower volume of sludge, and does not need harsh chemicals. System 700 uses in-line coagulation, flocculation and separation to pre-treat RO feedwater with electro-coagulation. The process includes the following characteristics:

1) Electro-coagulation allows chemicals to be generated on-site;

2) Aggregate sub-micron organic/inorganic particles for hydrodynamic separation to clarify RO feedwater;

3) 50% reduction in coagulant dosage with spiral mixer-conditioner compared to standard jar test protocol (*i.e.*, rapid mixing for 2 minutes followed by slow mixing for 28 minutes and long periods for sedimentation) ;

4) No formal flocculation step and no sedimentation needed;

5) Fast process - minutes instead of hours;

6) Continuous flow or intermittent operation with flow controls.

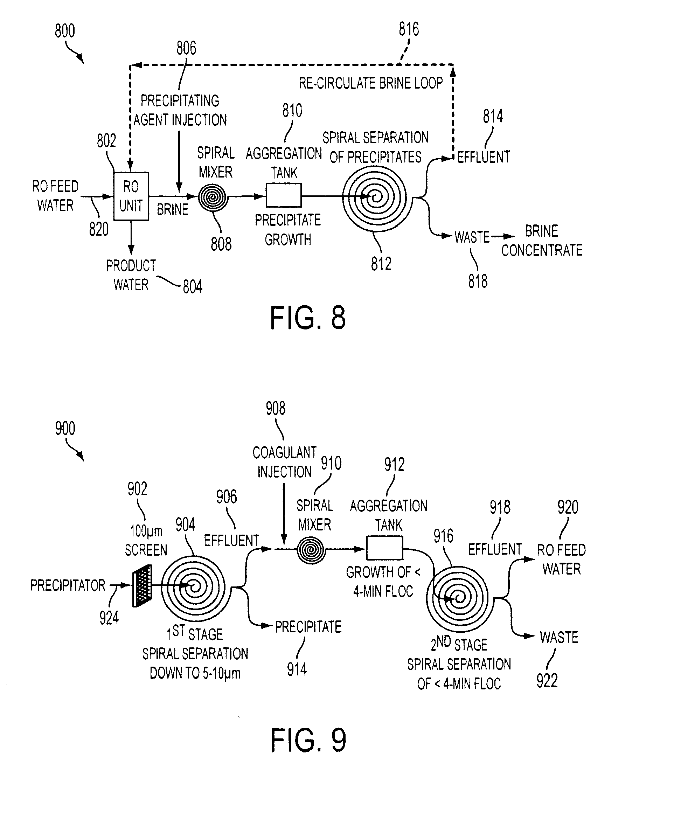

Figure 8 is a process schematic for creating hydroxide precipitates from concentrated brine to prevent scaling of the RO membranes by multivalent metals from brine concentrate.

System 800 includes a reverse osmosis (RO) unit 802 which receives the RO feedwater and will eventually output product water 804. A second output from RO unit 802 includes a water stream (with brine) which is injected with a precipitating agent 806 prior to provision to spiral mixer-conditioner 808. Thereafter, the stream enters aggregation tank 801 to allow for precipitate growth. Once sufficient growth has taken place, the stream is provided to spiral separator 812 which performs spiral separation for separating out the precipitates. An effluent output 814 (with precipitate removed) may optionally be recirculated back in a recirculate brine loop 816, to RO unit 802. The second output from spiral separator 812 is a waste stream 818 having precipitates.

The rate at which the RO feed water is input into system 800 may in one embodiment be controlled by a pump represented by arrow 820.

Thus, the system provides formation of precipitates (*e.g.*, magnesium hydroxide) and their separation from brine concentrate during an RO process. This process is also relevant for removing divalent metal ions from brackish water. The process includes the following characteristics:

1) Precipitate divalent/trivalent metal ions for hydrodynamic separation;

2) Reduction in $Ca(OH)_2$ dosage with spiral mixer;

3) No formal flocculation step and no sedimentation needed;

4) Fast process - on the scale of minutes;

5) Continuous flow or intermittent operation with flow controls.

Figure 9 is a process schematic for two-stage precipitation and separation of carbonate and hydroxide precipitates followed by coagulation, flocculation, and separation of all other suspensions from seawater or brackish water.

The system 900 includes an input filter 902, which in one embodiment may be a filter with $100\mu m$-sized openings, for removing large particulates prior to the stream being input to a first stage spiral separator 904, where the first stage spiral separation will separate out precipitates of a size $5\text{-}10\mu m$. An effluent output 906 carries the fluid stream which has precipitated material below 5 $10\mu m$ removed and is injected with a coagulant by a coagulant injection device 908. The stream is then provided to spiral mixer-conditioner 910 and aggregation tank 912 similar to Figures 6 and 7 to address particulates or aggregates below $5\mu m$ in diameter. The second output from the first stage spiral separator 904 provides a precipitate output 914. The rate at which the Precipitator is input into system 900 may in one embodiment be controlled by a pump represented by arrow 924.

The output from aggregation tank 912 is then sent to a second stage spiral separator 916 for spiral separation of the flocculated aggregates. Second stage spiral separator 916 includes a first effluent output 918 which is provided to RO feedwater system 920 and the second is output waste stream 922.

The system uses two stages: (i) initial spiral separation for precipitate recovery; and (ii) coagulation, flocculation, separation to pre-treat RO feedwater. The process includes the following characteristics:

1) Rapid extraction of precipitates in $5\mu m\text{-}10\mu m$ size range;

2) Aggregate sub-micron organic/inorganic particles for hydrodynamic separation to clarify RO feedwater;

3) 50% reduction in coagulant dosage with spiral mixer-conditioner compared to standard jar test protocol (*i.e.*, rapid mixing for 2 minutes rapid mix followed by slow mixing for 28 minutes and long periods for sedimentation) ;

4) No formal flocculation step and no sedimentation needed;

5) Fast process - minutes instead of days;

6) Continuous flow or intermittent operation with flow controls.

Figure 10 is a process schematic for coagulation, flocculation, and separation of suspended organics from seawater to provide clarified feedwater for membrane distillation (MD). MD is an emerging desalination method that can use waste heat at much lower temperatures than thermal distillation.

System 1000 includes a two filter input for raw seawater wherein the first filter 1002 has a 2 - 5mm filter screen and the second filter 1004 has a $100\mu m$ filter screen. The filtered water stream is then provided to a spiral separator 1006 which has a $10\mu m$ aggregate size cut-off for separation. A first effluent output 1008 provides effluent with aggregates removed to an optionally provided filter 1010, which supplies the filtered water to an MD water tank 1012. The second output of spiral separator 1006 is a waste stream 1014 for the output seawater. The rate at which the raw seawater is input into system 1000 may in one embodiment be controlled by a pump represented by arrow 1016.

The system provides a pre-treatment for membrane distillation. The process includes the following characteristics:

1) Separation of particles in raw seawater down to $10\mu m$;

2) Continuous flow or intermittent operation with flow controls.

Figure 11 is a process schematic for two-stage separation; first of coarse particles then followed by coagulation, flocculation, and separation of fine particles in the supernatant into medium fine tails (e.g. tailing pond water). This application is applicable to produce water from surface oil extraction, e.g. tar sands.

System 1100 includes filter 1102 which may be a 100 $\mu m$ screen filter to filter hydrocyclone overflow water, such that filtered water is provided to first stage spiral separator 1104. The first stage spiral separator may in one embodiment have a cutoff value for aggregate separation of 5 - $10\mu m$. First fines output 1106 provides a stream with fines to which coagulation system 1108 injects coagulant. The coagulate-injected stream is provided to spiral mixer-conditioner 1110 which mixes and conditions the streams and provides the stream with aggregated fines to aggregation tank 1112 for up to 4 mins. The second output from first stage spiral separator 1104 provides a water stream with coarse tails 1114. The output from aggregation tank 1112 is sent to a second spiral separator 1116 where the second spiral separator separates the remaining floc aggregates. Finally, a first output from the second spiral separator 1116 provides a clear effluent 1118 for recycled water reservoir 1120. The second output 1122 provides a concentrated mature fine tails (MFT). The rate at which the hydrocyclone overflow water is input into system 1100 may in one embodiment be controlled by a pump represented by arrow 1124.

The process includes the following characteristics:

> 1) Rapid extraction of precipitates in 5 - 10$\mu$m size range;
>
> 2) Aggregate sub-micron clay particles for separation;
>
> 3) 50% reduction in coagulant dosage with spiral mixer-conditioner compared to standard jar test protocol (*i.e.*, rapid mixing for 2 minutes rapid mix followed by slow mixing for 28 minutes and long periods for sedimentation);
>
> 4) No formal flocculation step and no sedimentation needed;
>
> 5) Fast process - minutes instead of days;
>
> 6) Continuous flow or intermittent operation with flow controls

Figure 12 is a process schematic for precipitation, aggregation, and separation of divalent metal ions from produced water. Up to 10 barrels of produced water may result from 1 barrel of oil extracted from the ground. Transport costs for moving produced water away from the drilling site for evaporation and subsequent replacement with fresh water are prohibitive. The process illustrated in Figure 12 allows on-site treatment and can be further enhanced to produce high water quality supernatant suitable for re-injection and steam generation.

System 1200 includes first input filter 1202 which may be embodied as 100$\mu$m filter screen which receives and filters a stream of Raw Produced Water which is then injected with calcium hydroxide ($Ca(OH)_2$) with mechanism 1204. This water stream with injected $Ca(OH)_2$ is provided to spiral mixer-conditioner 1206 which mixes the material and passes it to a reaction tank 1208 for approximately a minute of reaction processing to produce magnesium hydroxide ($Mg(OH)_2$) precipi-

tates. Thereafter, the water stream is injected with potassium carbonate ($K_2CO_3$) via injection system 1210. This processed stream is then sent to a second spiral mixer-conditioner 1212 where it is mixed, conditioned and output to precipitation tank 1214 for approximately one minute to precipitate calcium carbonate ($CaCO_3$). Thereafter, the precipitated flow is provided to a spiral separator 1216 which separates out aggregates and produces an effluent output 1218, and a precipitates output 1220. It should be pointed out that depending on the reaction rates, the first reaction tank in Figure 12 may not be necessary.

In a further embodiment, the precipitate flow coming from tank 1214 may provide some of the flow as feedback via feedback path 1222 to the input of the reaction tank 1208 where the injection occurs after spiral mixing in the first spiral mixer 1206. This feedback introduces precipitates to "seed" and grow larger aggregates of precipitates.

In still a further embodiment, the flow coming from the precipitation tank 1214 could be coagulated by injecting ferric chloride ($FeCl_3$) via injection mechanism 1224 and then a third spiral mixer-conditioner 1226 mixes and conditions the further injected flow. Thereafter from spiral mixer-conditioner 1226, the flow stream could be put into an aggregation tank 1228 for further growth prior to being provided to spiral separator 1216. The rate at which the raw produce water is input into system 1200 may in one embodiment be controlled by a pump represented by arrow 1230.

The system uses in-line precipitation, aggregation and separation of produce water to remove divalent ions. The process includes the following characteristics:

> 1) Precipitate magnesium hydroxide ($Mg(OH)_2$) and calcium carbonate ($CaCO_3$);
>
> 2) No formal flocculation step and no sedimentation needed;
>
> 3) Fast process;
>
> 4) Continuous flow or intermittent operation with flow controls.

Figure 13 is a process schematic for direct removal of suspended organic matter in seawater and dumping the seawater (waste) stream back into the source in order not to disrupt ecology (which will still need a sterilization step). With the impending adoption of the IMO (International Maritime Organization) treaty in 2010, ocean tankers are mandated to treat and neutralize organics in ballast water to prevent environmental impacts of discharge.

System 1300 includes an input filter screen 1302 which may be an approximately 50-100$\mu$m screen filter to receive the input seawater. The filtered seawater is then provided to spiral separator 1304 for separating out particulates remaining in the filtered flow of seawater. The effluent output 1308 of spiral separator 1304 is provided to optional filter 1308 and then to ballast water tank 1310. The waste output 1312 from spiral separator 1304 is waste seawater 1314. The rate at which the Input seawater is input into system 1300 may in one embodiment be controlled by a pump represented by arrow 1316.

This system provides ballast water treatment using cut-off size separation techniques. The process includes the following characteristics:

1) High throughput, continuous flow separation;

2) Reduced clogging of optional filter resulting in less frequent back flush - back flush may be dumped without treatment at in-take port;

3) Waste stream directly dumped without treatment at in-take port.

Figure 14 is a process schematic to pre-treat raw input seawater or brackish water to remove most suspended solids before presenting the clear effluent to the ballast tanks (which will still need a sterilization step).

System 1400 includes first input filter 1402 to filter input seawater. Input filter 1402 may be embodied in one embodiment as a 50-100 $\mu$m filter screen. This filtered stream is then injected with a coagulant via injection mechanism 1404. The injected flow is then provided to spiral mixer-conditioner 1406 which outputs the mixed, conditioned flow to aggregation tank 1408 for additional floc growth. Output from aggregation tank 1408 is provided to spiral separator 1410 which separates out the aggregated floc according to a selected size cutoff. Effluent output 1412 from spiral separator 1410 is an effluent stream provided to an optional filtering mechanism 1414, provided to ballast water tank 1416. The second output from spiral separator 1410 is a waste output 1418 which is output seawater. The rate at which the input seawater is input into system 1400 may in one embodiment be controlled by a pump represented by arrow 1420.

The process includes the following characteristics:

1) Aggregate sub-micron organic/inorganic particles for separation;

2) 50% reduction in coagulant dosage with spiral mixer-conditioner compared to standard jar test protocol (*i.e.*, rapid mixing for 2 minutes followed by slow mixing for 28 minutes and long periods for sedimentation);

3) No formal flocculation step and no sedimentation needed.

Figure 15 is a process schematic for algae dewatering for bio-fuel production, feedstock, and clarification of polished waste water prior to surface discharge. Algae typically grow in very dilute concentrations. Dewatering, or harvesting and removing water, is typically achieved by centrifugation, filtration, or floatation. Centrifugation is energy intensive, filtration is high in maintenance, and floatation is slow and requires large land area.

System 1500 includes a dual screen input for receiving open pond water. The first input screen 1502 may be embodied as a 2-5mm size, whereas the second input screen 1504 may be embodied as a 100$\mu$m size. The filtered water is moved to a first stage spiral separator 1506 providing a first output 1508 which includes a flow stream of concentrated algae to an aggregation tank 1510 for further growth of the aggregate algae. The second output from first stage spiral separator 1506 is an effluent output 1512 that may be provided to an optional feedback path 1514 to the open pond. The output from the aggregation tank 1510 is then sent to a second stage spiral separator 1516 where the concentrated aggregate, which in this embodiment is algae, is output at output 1518. The alternative output is the effluent output 1520 which also may be provided to optional feedback path 1514 to the open pond. The rate at which the open pond water is input into system 1500 may in one embodiment be controlled by a pump represented by arrow 1522.

The process includes the following characteristics:

1) Separation of algae;

2) two stages with 90:10 split to obtain two orders of magnitude concentration;

3) Distributed implementation - single setup processes 4 ponds to maximize dewatering, minimize pumping, and ensure circulation;

4) Fast process;

5) Continuous flow or intermittent operation with flow controls.

Figure 16 is a application where the structure of system 1500 may be implemented. In particular in this embodiment, system 1500 having multiple inputs or multiple systems 1500 is included within or generally provided to four ponds 1602, 1604, 1606, and 1608. By locating system 1500 in a centralized location with respect to ponds 1602-1608 an efficient collection of the aggregate such as in the form of algae may be accomplished. The effluent stream aids circulation in the ponds by directing fresh algae to the intake of the separators.

Figure 17 is a process schematic for coagulation, flocculation, and separation of process water (e.g. grape wash water) or grey wash water prior to surface discharge. The waste stream contains both bacteria and nutrients which could be channeled to an anaerobic digester for conversion to water and carbon dioxide ($CO_2$).

System 1700 includes a first filter 1702 having filter openings of approximately 2mm. Filter 1702 filters the grey wash water into a stream that has a coagulant injected via an injection mechanism 1704. The stream with the injected coagulant is provided to a spiral mixer 1706 which in turn moves the coagulant injected and filtered grey wash water to an aggregation tank 1708 for further growth of floc in the stream. Output from aggregation tank 1708 is provided to spiral separator 1710 where spiral separation occurs for less than approximately 4 minutes. Output of spiral separator 1710 is via effluent output 1712, and the stream is then provided to optional filter 1714 and is stored at a grey water reservoir 1716. The second output from the spiral separator 1710 is a waste output 1718. The rate at which the grey wash water is input into system 1700 may in one embodiment be controlled by a pump represented by arrow 1720.

This system provides in-line coagulation, flocculation and spiral separation for e.g. grape wash water. The process includes the following characteristics:

1) Aggregate sub-micron organic/inorganic particles for separation;

2) 50% reduction in coagulant dosage with spiral mixer-conditioner compared to standard jar test protocol (*i.e.*, rapid mixing for 2 minutes followed by slow mixing for 28 minutes and long periods for sedimentation);

3) No formal flocculation step and no sedimentation needed;

4) Fast process - minutes instead of days;

5) Continuous flow or intermittent operation with flow controls.

Figure 18 is a process schematic for two-stage initial separation: first stage for removal of larger debris, followed by coagulation, flocculation, and separation to produce treated water suitable for surface discharge. The waste streams can be channeled to an anaerobic digester to produce water and $CO_2$. This process may be suited for process water (e.g. palm oil mill effluent) with very high abundance of sub-micron debris.

System 1800 includes a input stream filter 1802 which may be a 100$\mu$m screen used to filter the for screen palm oil mill effluent (POME) prior to supplying the stream to a first stage spiral separator 1804 where the first stage spiral separator separates aggregates 5-10$\mu$m in size. The effluent output 1806 from spiral separator 1804 has a coagulant injected via injection mechanism 1808, prior to the inlet of spiral mixer-conditioner 1810. The output of the spiral mixer-conditioner 1810 is provided to a aggregation tank 1812 to allow further growth of floc (*e.g.*, for approximately 4 minutes). The second output from spiral separator 1804 is a waste output 1814. From aggregation tank 1812, the stream is provided to a second spiral separator 1816 where the separation operation of the aggregated floc is for approximately 4 minutes. The effluent output 1818 from spiral separator 1816 is grape water 1820, and the waste output 1822. The rate at which the palm oil mill effluent is input into system 1800 may in one embodiment be controlled by a pump represented by arrow 1824.

This system operates two stages: (i) initial spiral separation; and (ii) coagulation, flocculation and separation of POME to produce treated water. The process includes the following characteristics:

1) Initial separation of particles in raw POME down to 5 - 10$\mu$m;

2) Aggregate sub-micron organic/inorganic particles for separation to clarify;

3) 50% reduction in coagulant dosage with spiral mixer-conditioner compared to standard jar test protocol (*i.e.*, rapid mixing for 2 minutes followed by slow mixing for 28 minutes and long periods for sedimentation);

4) No formal flocculation step and no sedimentation needed;

5) Fast process - minutes instead of days;

6) Continuous flow or intermittent operation with flow controls.

Figure 19 is a process schematic for aggregation and recovery of volume dispersed titanium dioxide ($TiO_2$) nanoparticles used in an advanced oxidation technology ultraviolet (UV) sterilization system. The photocatalytic activity of the $TiO_2$ in the presence of UV effectively damages cellular membranes. This is a non-chemical alternative for sterilization and is most effective for volume dispersed $TiO_2$ compared to immobilizing them onto surfaces of flow conduits. The nano-particles are small (typically 25 nm) and recovery is through filtration, which is laborious.

System 1900 includes a first input filter 1902 which may be 100$\mu$m input screen, configured to screen particulates from input waste water. The filtered input waste water from input screen 1902 is passed to an Advanced Oxidation Treatment (AOT) system 1904. The output stream from AOT 1904 is pH adjusted made by the adjustment mechanism 1906 prior to the pH adjusted flow and provided to spiral mixer-conditioner 1908. Following the mixing by spiral mixer-conditioner 1908, the flow is provided to aggregation tank 1910 for further growth of the aggregated material. Output of aggregation tank 1910 is provided to spiral separator 1912 where the spiral separator separates out the TiO2 aggregates. Effluent output 1914 from spiral separator 1912, with the aggregates removed, is then passed through filter 1916 for the output of the flow to a sterilized water tank 1918. The alternative output from spiral separator 1912 is recovered $TiO_2$ 1920 and is sent back into the system as $TiO_2$ injection 1922 at the input of the AOT 1904. The rate at which the input waste water is input into system 1900 may in one embodiment be controlled by a pump represented by arrow 1924.

The process includes the following characteristics:

    1) Advanced Oxidation Technology

    • Volume dispersion and recovery of $TiO_2$

    • Flow-through UV reactor

    2) Spiral Units

    • Spiral Mixer-Conditioner to mix aggregation agent
    • Spiral Separator to recover aggregated $TiO_2$

Figure 20 is a process schematic for wastewater treatment where the suspended organics, including bacteria and nutrients, are re-circulated back to the primary clarifier. The clarified effluent stream may be sterilized and treated for surface discharge. The system provides an in-line coagulation, flocculation and separation system for wastewater treatment, replacing sedimentation and significantly reducing retention time outside of the period required for digestion by sludge micro-organisms.

System 2000 includes an input filter 2002 which may be a 100$\mu$m screen filter designed to receive an input flow from a source having various stages of fluid defined as sludge 2004, primary clarifier 2006 and floaters 2008. Flow from this input is filtered by input filter screen 2002 (*e.g.*, a 100$\mu$m screen) and this filtered flow is then injected with coagulant via coagulant injection system 2010. The injected flow is provided to a spiral mixer 2012 and the mix flow is provided to a aggregation tank 2014 for further floc growth of the aggregates from the input stream. Output from aggregation tank 2014 is provided to spiral separator 2016 for separation of floc within the stream. Thereafter, the effluent output 2018 is provided to an optional filter 2020 and the flow is stored in a clarify tank 2022. The waste output 2024 from spiral separator 2016 is then provided via a feedback path 2026 to the input having sludge 2004, primary clarifier 2006 and floaters 2008. The rate at which the input (2004, 2006, 2008) is input into system 2000 may in one embodiment be controlled by a pump represented by arrow 2028.

The process includes the following characteristics:

    1) Aggregate sub-micron organic/inorganic particles for separation;

    2) 50% reduction in coagulant dosage with spiral mixer-conditioner compared to standard jar test protocol (rapid mixing for 2 minutes followed by slow mixing for 28 minutes and long periods for sedimentation);

    3) No formal flocculation step and no sedimentation needed;

    4) Fast process, continuous flow, small footprint, low power, low pressure;

    5) Waste stream recycled back to primary clarifier.

Figure 21 is a process schematic for wastewater treatment where the waste stream is channeled to the anaerobic digester to produce water, $CO_2$ and methane at a faster rate.

System 2100 is substantially the same as system 2000. However instead of waste output 2024 being recirculated back to the input stream, an anaerobic digester 2102 is provided to receive the waste stream 2024. The concentration provided by this separation increases the rate of biological reaction and the rate of methane generation. The rate at which the input (2004, 2006, 2008) is input into system 2100 may in one embodiment be controlled by a pump represented by arrow 2104.

The system provides concentration of primary treatment effluent to a digester for wastewater treatment. The process includes the following characteristics:

    1) Aggregate sub-micron organic/inorganic particles for separation;

    2) 50% reduction in coagulant dosage with spiral mixer-conditioner compared to standard jar test protocol (*i.e.*, rapid mixing for 2 minutes followed by slow mixing for 28 minutes and long periods for sedimentation);

    3) No formal flocculation step and no sedimentation needed;

    4) Fast process, continuous flow, small footprint, low power, low pressure;

    5) Waste stream is concentrated organisms and nutrients to the anaerobic digester.

It is to be appreciated that the platform embodiments of Figures 6-21 have been shown to be used in a method of the present application as described. In certain embodiments, the spiral mixer may be a mixer which has been described in previous applications.

It is also noted the spiral separator, during the spiral separation operation, may be described as performing a hydrodynamic separation of the input stream into the two or more output streams. It is also to be understood as the concept of separation includes concentrating the particles of particulates within the input stream into a more compact defined area, there may be times when the output of the spiral separator is a single output carrying all of the fluid stream, but with the particulates or particles within the fluid stream in a concentrated area of that stream. Still further, there are alternatives where the inlet may be a multiple inlet system mixing two or more input streams prior to separation.

The method of the invention may be desirably combined with many other different systems or applications; including cascading mixer-conditioner structures and/or separator structures to allow sequential processing advantages such as prevention of unwanted chemical-chemical interactions.

**Claims**

1. A method for treating a fluid stream by a fluid treatment system comprising:

inputting a fluid stream to an input section of the fluid treatment system;
receiving the fluid stream by a spiral mixer-conditioner in form of a single spiral and being positioned in operative association with the input section, wherein the fluid stream enters the spiral mixer-conditioner at an inlet at a center of the spiral, the spiral mixer-conditioner including a mixer section and an conditioner section, wherein the mixer section includes at least the first two turns of the spiral mixer-conditioner,
controlling the shear rate in the spiral mixer-conditioner, by use of the width of the channels in the spiral mixer-conditioner and the velocity of the input stream into the spiral mixer-conditioner such that the flow of the input stream in the mixer section is at or above the critical Dean number of 150 and the flow of the input stream in the conditioner section is less than the critical Dean number of 150;
receiving the mixed and conditioned fluid stream at a spiral separator;
separating the mixed and conditioned fluid stream received by the spiral separator into at least two fluid streams, a first fluid stream having particulates in the input fluid stream removed and the second fluid stream having the particulates in the input fluid stream concentrated; and
outputting the two fluid streams from the spiral separator,
wherein the Dean number $D_e$ is defined as:

$$D_e = \frac{\rho V D}{\mu}\left(\frac{D}{2R}\right)^{1/2}$$

wherein $p$ is the density of the fluid; $\mu$ is the dynamic viscosity; $V$ is the axial velocity; $D$ is the hydraulic diameter; and R is the radius of curvature of the path of the channel.

2. The method according to claim 1 further including dissolving materials into the fluid stream, inducing a precipitation and suspension formation from the materials dissolved into the fluid stream and conditioning the dissolved materials for downstream hydrodynamic separation by the spiral separator.

3. The method according to claim 1 further including aggregating nanoparticles and/or submicron particles into larger robust aggregates and conditioning the aggregates for hydrodynamic separation by the spiral separator.

4. The method according to claim 1 further including capturing volume dispersed synthetic particles using hydrodynamic separation by the spiral separator for re-charging and reuse.

5. The method according to claim 4 wherein the synthetic particles are functionalized to treat contaminants in liquids.

6. The method according to claim 1 wherein the conditioning of the input stream includes growing the particles in the input stream into a larger sized aggregate.

7. The method according to claim 6 wherein the aggregate growth occurs in three stages:

an impulsive growth stage driven by particle concentration and orthokinetics, ,
an aggregate size limit of growth when the fluid shear rate exceeds van der Waals force, and
a size roll-back of growth due to second order effects.

8. The method according to claim 1 wherein the fluid stream is one of municipal water, seawater, brackish water, produced water, ballast water, algae containing water, agricultural water, water carrying synthetic particles, or wastewater.

9. The method according to claim 1 wherein the mixing, conditioning and separating of the input stream, obtains at least one of detection of biological material in the input stream, industrial purification of the input stream, remediation of the input stream, oil/water separation of the input stream.

**Patentansprüche**

1. Verfahren zum Behandeln eines Fluidstroms mit einem Fluidbehandlungssystem, das umfasst:

   Einleiten eines Fluidstroms in einen Einleitabschnitt des Fluidbehandlungssystems; Aufnehmen des Fluidstroms mit einem Spiralmischer-Konditionierer in Form einer einzelnen Spirale, der in funktionaler Verbindung mit dem Einleitabschnitt angeordnet ist, wobei der Fluidstrom an einem Einlass in einer Mitte der Spirale in den Spiralmischer-Konditionierer eintritt, der Spiralmischer-Konditionierer einen Mischerabschnitt sowie einen Konditioniererabschnitt enthält und der Mischerabschnitt wenigstens die ersten zwei Windungen des Spiralmischer-Konditionierers enthält,
   Steuern der Scherrate in dem Spiralmischer-Konditionierer unter Verwendung der Breite der Kanäle in dem Spiralmischer-Konditionierer und der Geschwindigkeit des Einleitstroms in dem Spiralmischer-Konditionierer so, dass der Fluss des Einleitstroms in den Mischerabschnitt auf oder über der kritischen Dean-Zahl von 150 liegt und der Fluss des Einleitstroms in dem Konditioniererabschnitt unter der kritischen Dean-Zahl von 150 liegt;
   Aufnehmen des gemischten und konditionierten Fluidstroms an einem Spiralabscheider;
   Trennen des mit dem Spiralabscheider aufgenommenen gemischten und konditionierten Fluidstroms in wenigstens zwei Fluidströme, d. h. einen ersten Fluidstrom, aus dem Teilchen in dem Eingangs-Fluidstrom entfernt sind, und den zweiten Fluidstrom, in dem die Teilchen in dem Eingangs-Fluidstrom konzentriert sind; und
   Ausleiten der zwei Fluidströme aus dem Spiralabscheider,
   wobei die Dean-Zahl $D_e$ definiert ist als:

   $$D_e = \frac{\rho VD}{\mu}\left(\frac{D}{2R}\right)^{1/2},$$

   wobei $p$ die Dichte des Fluids ist; $\mu$ die dynamische Viskosität ist, $V$ die Axialgeschwindigkeit ist, $D$ der hydraulische Durchmesser ist und $R$ der Krümmungsradius des Weges des Kanals ist.

2. Verfahren nach Anspruch 1, das des Weiteren Lösen von Materialien in den Fluidstrom, Veranlassen einer Ausfällung und einer Suspensionsbildung aus den in den Fluidstrom gelösten Materialien und Konditionieren der gelösten Materialien für stromab stattfindende hydrodynamische Abscheidung mit dem Spiralabscheider.

3. Verfahren nach Anspruch 1, das des Weiteren Aggregieren von Nanoteilchen und/oder Submikrometerteilchen zu größeren robusten Aggregaten und Konditionieren der Aggregate für hydrodynamische Abscheidung mit dem Spiralabscheider einschließt.

4. Verfahren nach Anspruch 1, das des Weiteren Einfangen volumen-dispergierter synthetischer Teilchen unter Verwendung hydrodynamischer Abscheidung mit dem Spiralabscheider für erneute Beschickung und Wiederverwendung einschließt.

5. Verfahren nach Anspruch 4, wobei die synthetischen Teilchen zum Behandeln von Verunreinigungen in Flüssigkeiten funktionalisiert sind.

6. Verfahren nach Anspruch 1, wobei das Konditionieren des Einleitstroms einschließt, dass die Teilchen in dem Einleitstrom zu einem größeren Aggregat gezüchtet werden.

7. Verfahren nach Anspruch 6, wobei das Wachstum des Aggregats in drei Stufen stattfindet:

   einer Stufe impulsiven Wachstums, das durch Teilchenkonzentration und Orthokinese bewirkt wird,
   einem Wachstum mit begrenzter Größe des Aggregats, wenn die Scherrate des Fluids die van-der-Waalsche-Kraft übersteigt, und
   einem Wachstum mit abnehmender Größe aufgrund von Effekten zweiter Ordnung.

8. Verfahren nach Anspruch 1, wobei der Fluidstrom aus Trinkwasser, Seewasser, Brackwasser, verbrauchtem Wasser (produced water), Ballastwasser, Algen enthaltendem Wasser, Landwirtschaftswasser, Wasser, das synthetische Teilchen enthält, oder Abwasser besteht.

9. Verfahren nach Anspruch 1, wobei mit dem Mischen, Konditionieren und Trennen des Einleitstroms Erfassung von biologischem Material in dem Einleitstrom, industrielle Reinigung des Einleitstroms, Sanierung des Einleitstroms oder/und Öl/Wasser-Abscheidung des Einleitstroms erreicht wird.

**Revendications**

1. Procédé de traitement d'un courant de fluide par un système de traitement de fluide comprenant :

l'entrée d'un courant de fluide dans une section d'entrée du système de traitement de fluide ;

la réception du courant de fluide par un mélangeur-conditionneur en spirale sous la forme d'une spirale unique et étant positionné en association opérationnelle avec la section d'entrée, dans lequel le courant de fluide entre dans le mélangeur-conditionneur en spirale au niveau d'une entrée en un centre de la spirale, le mélangeur-conditionneur en spirale incluant une section de mélangeur et une section de conditionneur, dans lequel la section de mélangeur inclut au moins les deux premières spires du mélangeur-conditionneur en spirale,

le contrôle du taux de cisaillement dans le mélangeur-conditionneur en spirale, en utilisant la largeur des canaux dans le mélangeur-conditionneur en spirale et la vitesse du courant d'entrée dans le mélangeur-conditionneur en spirale de façon à ce que l'écoulement du courant d'entrée dans la section de mélangeur soit égal ou supérieur au nombre critique de Dean de 150 et que l'écoulement du courant d'entrée dans la section de conditionneur soit inférieur au nombre critique de Dean de 150 ;

la réception du courant de fluide mélangé et conditionné au niveau d'un séparateur en spirale ;

la séparation du courant de fluide mélangé et conditionné reçu par le séparateur en spirale en au moins deux courants de fluide, un premier courant de fluide ayant des matières particulaires dans le courant de fluide d'entrée supprimées et le deuxième courant de fluide ayant les matières particulaires dans le courant de fluide d'entrée concentrées ; et

la délivrance en sortie des deux courants de fluide du séparateur en spirale,

dans lequel le nombre de Dean De est défini comme :

$$D_e = \frac{\rho V \dot{D}}{\mu} \left( \frac{D}{2R} \right)^{1/2}$$

dans laquelle p est la densité du fluide ; $\mu$ est la viscosité dynamique ; $V$ est la vitesse axiale ; D est le diamètre hydraulique ; et R est le rayon de courbure de la voie du canal.

2. Procédé selon la revendication 1 incluant en outre la dissolution de matières dans le courant de fluide, induisant une précipitation et une formation de suspension à partir des matières dissoutes dans le courant de fluide et le conditionnement des matières dissoutes pour séparation hydrodynamique en aval par le séparateur en spirale.

3. Procédé selon la revendication 1 incluant en outre l'agrégation de nanoparticules et/ou de particules submicrométriques en agrégats robustes de plus grande taille et le conditionnement des agrégats pour séparation hydrodynamique par le séparateur en spirale.

4. Procédé selon la revendication 1 incluant en outre la capture de particules synthétiques dispersées en volume en utilisant une séparation hydrodynamique par le séparateur en spirale pour rechargement et réutilisation.

5. Procédé selon la revendication 4 dans lequel les particules synthétiques sont fonctionnalisées pour traiter des contaminants dans des liquides.

6. Procédé selon la revendication 1 dans lequel le conditionnement du courant d'entrée inclut la croissance des particules dans le courant d'entrée en un agrégat de plus grande taille.

7. Procédé selon la revendication 6 dans lequel la croissance d'agrégat se fait en trois étapes :

une étape de croissance impulsive entraînée par une concentration et une orthocinétique de particules,
une limite de croissance de taille d'agrégat lorsque le taux de cisaillement de fluide excède la force de van der Waals, et
un recul de croissance de taille dû à des effets de second ordre.

8. Procédé selon la revendication 1 dans lequel le courant de fluide est un parmi une eau municipale, une eau de mer, une eau saumâtre, une eau produite, une eau de ballast, une eau contenant des algues, une eau agricole, une eau comportant des particules synthétiques, ou une eau usée.

9. Procédé selon la revendication 1 dans lequel le mélange, le conditionnement et la séparation du courant d'entrée obtiennent au moins une parmi une détection de matière biologique dans le courant d'entrée, une purification industrielle du courant d'entrée, une remédiation du courant d'entrée, une séparation huile/eau du courant d'entrée.

100

6-TURN SEMI-CIRCULAR SPIRAL

114

116 118

112

110

108

106

104

102

FIG. 1

FIG. 2

FIG. 3

400

SHEAR RATE VS AGGREGATE SIZE

FIG. 4

AGGREGATE SIZE VS TIME

FIG. 5

600

606
COAGULANT 608
INJECTION

602          100μm          610
          SCREEN        SPIRAL    AGGREGATION
                        MIXER     TANK                                    616
                                                                   INSURANCE
                                           612      614    FILTER              618
RAW                                              EFFLUENT
SEAWATER                                                            RO FEED
                                                                   WATER
     2-5mm                    GROWTH OF <
     INTAKE       604         4-MIN FLOC
     SCREEN
                                      SPIRAL SEPARATION        WASTE
                                      OF < 4-MIN FLOC
                                                               620

FIG. 6

700

          100μm          SPIRAL    AGGREGATION
722       SCREEN   702    MIXER    TANK                INSURANCE
                                                        FILTER

RAW                                              EFFLUENT       RO FEED
SEAWATER                                                        WATER

     2-5mm       EC UNIT       GROWTH OF <
     INTAKE                    4-MIN FLOC                 ANTI-SCALANT
     SCREEN                                               CHLORINE
                                   SPIRAL SEPARATION     WASTE
                                   OF < 4-MIN FLOC              704

FIG. 7

FIG. 8

FIG. 9

FIG. 10

FIG. 11

FIG. 12

1300

1302

INPUT
SEAWATER

1316   50-100µm
       SCREEN

1304

SPIRAL SEPARATION
OF PARTICULATES

1306

EFFLUENT

1308

OPTIONAL
FILTER

1310

BALLAST
WATER
TANK

WASTE

1312

OUTPUT SEAWATER

1314

## FIG. 13

1400

1404

COAGULANT   1406
INJECTION

1402

INPUT
SEAWATER

1420   50-100µm
       SCREEN

SPIRAL
MIXER

1408

AGGREGATION
TANK

FLOC
GROWTH

1410

SPIRAL SEPARATION
OF FLOC

1412

EFFLUENT

1414

OPTIONAL
FILTER

1416

BALLAST
WATER
TANK

WASTE

1418

OUTPUT SEAWATER

## FIG. 14

1500

1514

1502 1504 1512

2-5mm 100µm 1506 EFFLUENT 1510
SCREEN SCREEN

OPEN 1520
POND EFFLUENT

AGGREGATION 1516
TANK

1522 1508 ALGAE
CONCENTRATE
1ST STAGE SPIRAL TO PRESS
SEPARATOR
2ND STAGE SPIRAL 1518
SEPARATOR

FIG. 15

1602 1604

POND 1500 POND

SPIRAL
SETUP

1608 1606

POND POND

FIG. 16

1700    1704

COAGULANT
INJECTION    1706    1708

1702    SPIRAL    AGGREGATION
MIXER    TANK

GREY
WASH
WATER

2mm
1720    SCREEN

GROWTH OF <
4-MIN FLOC

1710

1712    OPTIONAL
FILTER    1714

EFFLUENT

1716
TREATED WATER
RESERVOIR

SPIRAL SEPARATION
OF < 4-MIN FLOC

WASTE

1718

# FIG. 17

1800

1808

COAGULANT
INJECTION    1810    1812

1802    SPIRAL    AGGREGATION
MIXER    TANK

100 μm
SCREEN    1804

1806
EFFLUENT

PALM OIL
MILL
EFFLUENT

1824    1ST STAGE SPIRAL
SEPARATION DOWN TO
5-10μm

WASTE

1814

GROWTH OF
< 4-MIN FLOC

1816

1818    1820
EFFLUENT    TREATED
WATER

2ND STAGE SPIRAL
SEPARATION OF < 4-MIN FLOC

WASTE

1822

# FIG. 18

FIG. 19

FIG. 20

FIG. 21

**EP 2 260 925 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090114607 A, Lean
- US 20090114601 A
- DE 4200802
- US 11936729 B

**Non-patent literature cited in the description**

- **R. THIRUVENKATACHARI et al.** *Desalination,* 2002, vol. 147, 83-88